# EUROPÄISCHE PATENTSCHRIFT

(11) **EP 0 513 750 B1**
(45) Veröffentlichungstag und Bekanntmachung des Hinweises auf die Patenterteilung: **04.01.1995**
(21) Anmeldenummer: 92108030.5
(22) Anmeldetag: 13.05.1992
(51) Int. Cl.: A01B 59/043

(54) **Kuppeldreieck zur front- oder heckseitigen Verbindung eines landwirtschaftlichen Anbaugerätes mit einem Schlepper**
Mounting triangle for connection of an agricultural implement to the front or back of a tractor
Triangle d'attelage frontal ou dorsal d'une machine agricole à un tracteur

(30) Priorität: 17.05.1991 DE 4116200
(43) Veröffentlichungstag der Anmeldung: 19.11.1992
(73) Patentinhaber: Friedrich Mörtl Schleppergerätebau GmbH & Co. KG, D-97737 Gemünden (DE)
(72) Erfinder: Grenzebach, Hans, W-8780 Gemünden (DE)
(74) Vertreter: Rehberg, Elmar, Dipl.-Ing.

(56) Entgegenhaltungen:
- EP-A- 0 197 026
- FR-A- 1 463 146
- FR-A- 2 305 926

## Beschreibung

Die Erfindung bezieht sich auf ein Kuppeldreieck zur front- oder heckseitigen Verbindung eines landwirtschaftlichen Anbaugerätes mit einem Schlepper, mit einem schlepperseitig angeordneten dreieckförmigen Rahmenteil, an dessen im Scheitelbereich angeordneter Platte in einem Lager eine Führungsrolle zur Erleichterung der Aufnahme des geräteseitigen Rahmenteils angeordnet ist. Solche Kuppeldreiecke werden zur Schnellverbindung eines landwirtschaftlichen Gerätes mit einem Schlepper eingesetzt, wobei üblicherweise das schlepperseitig angeordnete dreieckförmige Rahmenteil dauerhaft mit einer Dreipunktaufhängung eines Schleppers verbunden ist, während der geräteseitige Rahmenteil dauerhaft an dem jeweiligen Anbauberät vorgesehen ist.

Ein Kuppeldreieck der eingangs beschriebenen Art ist aus FR-A-2305926 bekannt. Der schlepperseitig angeordnete Rahmenteil weist etwa die Form eines Dreiecks auf und besteht in seinem wesentlichen Teil aus Abschnitten eines Rechteckrohres, die entsprechend zusammengeschweißt sind. Dieser Rahmenteil besitzt zwei Schenkel aus dem Rechteckrohr, die symmetrisch zu einer vertikalen Längsmittelebene angeordnet sind. Der nach oben gerichtete Scheitelbereich, in dem sich die beiden Schenkel begegnen, wird durch eine etwa horizontal angeordnete Platte abgeschlossen, die Bestandteil der Schweißverbindung sein kann. Auf dieser Platte ist in einem Lager eine doppelte Führungsrolle zur Aufnahme des geräteseitigen Rahmenteils angeordnet. Die Anordnung ist so getroffen, daß die Achse der doppelten Rolle etwa in Fahrtrichtung weist, wobei das Lager von einem Lagerbock gebildet wird, der sich im wesentlichen quer zur Fahrtrichtung erstreckt und von einem Lagerbolzen durchsetzt wird, an dessen beiden Endbereichen die Rollen vorgesehen sind. Diese Rollen üben nur eine Führungsfunktion quer zur Fahrtrichtung aus. Sie erfüllen ihre Funktion nur dann, wenn die beiden durch die jeweiligen Rahmenteile aufgespannten Ebenen einander weitgehend decken. Oft kommt es jedoch vor, daß diese beiden Ebenen gegeneinander schräg stehen, sich also die Ebenen in einer Linie schneiden. Eine solche Kippung der Ebene des geräteseitigen Rahmenteils erfolgt beispielsweise dadurch, daß das auf dem Boden abgesetzte Anbaugerät im Boden ungleichmäßig einsinkt. Auch wird der schlepperseitige Rahmenteil von der Dreipunktaufhängung eines Schleppers nach der gegebenen Geometrie beim Anheben und Absenken geführt, wobei in vielen Fällen der Oberlenker ohne Hydraulikzylinder ausgebildet ist. Ein solcher Oberlenker ist zwar in aller Regel über ein Gewinde längenveränderlich. Diese Einstellung des längenveränderlichen Oberlenkers wird jedoch für das jeweilige Anbaugerät nur einmal eingestellt und beispielsweise zum Aufnehmen oder Absetzen des Anbaugerätes nicht verändert. Auch durch diese Geometrie kann sich eine Kippung der beschriebenen Ebenen gegeneinander ergeben, so daß das Aufnehmen eines abgesetzten Anbaugerätes nicht so einfach ist, wie es an sich aufgrund des rechteckigen Querschnitts des schlepperseitigen Rahmenteils und des U-förmigen Querschnitts des geräteseitigen Rahmenteils denkbar ist. Die bekannte doppelte Führungsrolle ist auf der Seite des Anbaugerätes einerseits sowie auf der Seite des Schleppers andererseits mit je einem kegelförmigen Abschnitt endseitig ergänzt, um auch eine Führungsfunktion in Arbeitsrichtung herbeizuführen. Diese Führungsfunktion ist jedoch nur sehr begrenzt wirksam, weil hier nicht die rollende Reibung, sondern nur die Gleitreibung ausnutzbar ist und aufgrund des gewählten Kegelwinkels und der Wirkrichtung des einwirkenden Gewichtes des Anbaugerätes sehr schnell Selbsthemmung eintritt. Weiterhin ist - wenn überhaupt - die Führungsfunktion in Arbeitsrichtung auf ein sehr geringes Maß begrenzt, so daß es praktisch nur dann möglich ist, das Anbaugerät mit Hilfe des Kuppeldreiecks aufzunehmen, wenn sich die beiden in Rede stehenden Ebenen praktisch decken.

Der Erfindung liegt die Aufgabe zugrunde, ein Kuppeldreieck der eingangs beschriebenen Art bereitzustellen, welches eine verbesserte Führungsfunktion erbringt, so daß das Anbaugerät auch bei einer größeren Kippung der beiden Ebenen der Rahmenteile zueinander aufgenommen werden kann.

Erfindungsgemäß, und gemäß Anspruch 1, wird dies bei dem Kuppeldreieck der eingangs beschriebenen Art dadurch erreicht, daß die Führungsrolle mit zur Fahrtrichtung bei Aufsicht von oben schräger aber nicht senkrechter Achse auf der Platte angeordnet ist. Die Achse der Führungsrolle ist damit weder in Fahrtrichtung noch quer dazu vorgesehen, sondern schräg. Durch diese Schräganordnung wird erreicht, daß die rollende Reibung der Führungsrolle für eine Führungsfunktion in Fahrtrichtung sowie quer dazu ausgenutzt werden kann. Da die Gewichtskraft eines Anbaugerätes zu Beginn eines Aufnahmevorganges des Anbaugerätes auf die Führungsrolle am schlepperseitigen Rahmenteil nach vorn oder hinten abwärts geneigt ist kommt es für die Erfüllung dieser Führungsfunktion darauf an, daß die Teile in einer solchen Neigung aneinander anliegen, daß die Führungsrolle bei Einwirken der Gewichtskraft eine Drehung ausführen kann, die dem Schlepper zugekehrt ist. Durch die Schräganordnung der Führungsrolle ist es möglich, den Durchmesser der Führungsrolle vorteilhaft zu vergrößern, wobei die rechteckige Durchbrechung des geräteseitigen Rahmenteils unverändert bleibt. Der Durchmesser der Führungsrolle ist also größer als eine Seitenlänge der Durchbrechung des anbauseitigen Rahmenteils. Durch die Schräganordnung wird der Winkel der Tangente an die sich ergebende Ellipse des kreisförmigen Umfangs der Führungsrolle für ein Abgleiten und damit einer Aufnahme des geräteseitigen Rahmenteils günstiger. Die Schräglage der Achse der Führungsrolle ergibt sich zweckmäßig aus der Lage der Diagonale der rechteckigen Durchbrechung des geräteseitigen Rahmenteils. Nur wenn diese Durchbrechung quadratisch ist, beträgt die Schräglage Zweckmäßig 45°. Die angesprochene Schräglage der Achse der Führungsrolle ergibt sich bei Aufsicht von oben, wobei die Achse nicht unbedingt in einer Horizontalebene liegen muß.

Neben der Führungsrolle, auf der dem Schlepper abgekehrten Seite, kann ein Führungsanschlag vorgesehen sein, der eine Führungskante aufweist. Dieser Führungsanschlag mit seiner Führungskante ist der Führungsrolle in besonderer Weise zugeordnet und erfüllt Mehrfachfunktion. Der Führungsanschlag dient einmal dazu, das Anbaugerät kurzzeitig anzuheben, um eine gewisse Ausrichtwirkung zu erzielen und den Aufnahmevorgang gleichsam während des darauf erfolgenden zweiten Hebevorgangs zu erleichtern. Die Führungskante vergrößert den Führungsbereich der Führungsrolle in einer Richtung. Bei entsprechender Anordnung der Führungskante ergeben sich größere überbrückbare Kippwinkel der von den beiden Rahmenteilen aufgespannten Ebenen. Die Führungskante ermöglicht zwar nur die Ausnutzung der Gleitreibung. Durch die Verbindung mit einer Führungsrolle kann jedoch die Führungskante so steil angeordnet werden, daß eine Selbsthemmung vermieden wird.

Die Führungskante kann relativ zur Führungsrolle einen Aufsetzbereich des geräteseitigen Rahmenteils auf der Führungsrolle auf der dem Schlepper zugekehrten Seite derart begrenzen, daß die Wirklinie des Gewichts des Anbaugerätes auf das schlepperseitige Rahmenteil die durch die Achse der Führungsrolle festgelegte, etwa horizontal verlaufende Ebene zwischen Achse und Schlepper durchdringt. Damit ist sichergestellt, daß sich die Führungsrolle während des Aufnahmevorganges in einer auf den Schlepper zugekehrten Richtung dreht, so daß die beiden Rahmenteile in der vorgegebenen Kuppelstellung übereinanderzuliegen kommen. Dies gilt sowohl bei frontseitigem wie auch bei heckseitigem Einsatz. Von besonderer Bedeutung ist dabei wiederum die Schräganordnung der Achse der Führungsrolle, weil damit ein Bereich der von der Achse der Führungsrolle festgelegten Ebene geschaffen wird, in dem der Durchdringungspunkt mit der Wirklinie des Gewichtes des Anbaugerätes zu liegen kommt und der sich relativ weit von dem Schlepper weg erstreckt. Dabei kommt es auf die besondere Zuordnung des Punktes der Führungskante relativ zum Umfang der Führungsrolle an, durch den der Aufsetzbereich begrenzt wird. Letztlich wird durch diese Anordnung und Ausbildung erreicht, daß der geräteseitige Rahmenteil auch bei größeren Kippwinkeln während des Aufnahmevorganges sicher geführt wird, bis der geräteseitige Rahmenteil unter Deckung der beiden Ebenen seine ordnungsgemäß gekuppelte Lage auf dem schlepperseitigen Rahmenteil einnimmt.

Die Führungskante ist an dem die Führungsrolle nach oben überragenden Teil des Führungsansatzes vorgesehen, so daß zunächst der anbauseitige Rahmenteil Kontakt mit der Führungskante des Führungsanschlags bekommt und dann sich der Kontakt im Aufsetzbereich der Führungsrolle fortsetzt.

Die Führungskante kann etwa vertikal angeordnet sein. Eine genaue vertikale Anordnung ist möglich. Durch eine geringfügige Schräganordnung zur vertikalen Richtung kann der beim Aufnahmevorgang überbrückbare Kippwinkel noch vergrößert werden.

Die Führungsrolle ist zweckmäßig mit maximalem Durchmesser entsprechend der Diagonale der Durchtrittsöffnung des geräteseitigen Rahmenteils auf dem schlepperseitigen Rahmenteil schräg angeordnet. Damit wird die Führungsrolle mit möglichst großem Durchmesser ausgebildet. In Verbindung mit der Schräganordnung der Führungsrolle wirkt sich dies jedoch nicht nachteilig, sondern im Gegenteil vorteilhaft aus.

Der Führungsanschlag kann auf der dem Schlepper abgekehrten Seite eine den Umfang der Führungsrolle unterschreitende Abschrägung zur erleichterten Verbindung des dreieckförmigen geräteseitigen Rahmenteils mit dem schlepperseitigen Rahmenteil aufweisen, so daß auch hier die Führungsrolle ihre Führungsfunktion erfüllt, wenn die von den Rahmenteilen aufgespannten Ebenen mit einem negativen Kippwinkel gegeneinander geneigt sein sollten.

Der Führungsanschlag kann einen der Durchbrechung des geräteseitigen Rahmenteils angepaßten Umriß aufweisen. Dieser Umriß ist bei Draufsicht von oben kleiner als der Umriß der Durchbrechung, so daß die beiden Rahmenteile in der gekuppelten Stellung keinen Kontakt über die Führungsrolle oder den Führungsanschlag haben, sondern die Kräfte im Bereich der Schenkel der beiden Rahmenteile aufgenommen werden.

Die Achse der Führungsrolle kann horizontal, also senkrecht zu der von dem schlepperseitigen Rahmenteil aufgespannten Ebene angeordnet sein. Es ist aber auch möglich, daß die Achse der Führungsrolle vom Schlepper nach vorn oder hinten gegenüber der Horizontalebene geringfügig abwärtsgeneigt angeordnet ist. Die Neigung nach vorn ergibt sich bei frontseitigem Einsatz. Die Neigung nach hinten entsprechend bei heckseitiger Verwendung. Durch diese "Schrägstellung", die mit der Schräganordnung nach der Erfindung nicht zu verwechseln ist, wird der überbrückbare Kippwinkelbereich zwischen den beiden Ebenen der Rahmenteile nochmals vergrößert.

Die Führungsrolle kann auf einem hohlen Lagerbolzen gelagert sein, der auch den Führungsanschlag durchsetzt. Damit wird einerseits die Führungsrolle auf einem relativ großem Durchmesser abgestützt, so daß sie leicht drehbar ist und trotzdem in der Lage ist, erhebliche Kräfte während der Führungsfunktion aufzunehmen. Andererseits ergibt sich vorteilhaft die Möglichkeit, einen Absteckbügel durch den hohlen Lagerbolzen zu führen, der als mechanische Sicherung der Rahmenteile in der gekuppelten Stellung dient. Diese Einführbarkeit eines Absteckbügel setzt voraus, daß die Bohrung des Lagerbolzens komplett oberhalb der Ebene liegt, in der sich die Durchbrechung des geräteseitigen Rahmenteils befindet.

Die Erfindung wird anhand eines bevorzugten Ausführungsbeispiels weiter erläutert und beschrieben.
Es zeigen:
- Figur 1: eine Draufsicht von oben auf die für die Erfindung wesentlichen Teile des Kuppeldreiecks und
- Figur 2: eine teilweise aufgebrochene Seitenansicht in Richtung der Achse der Führungsrolle.

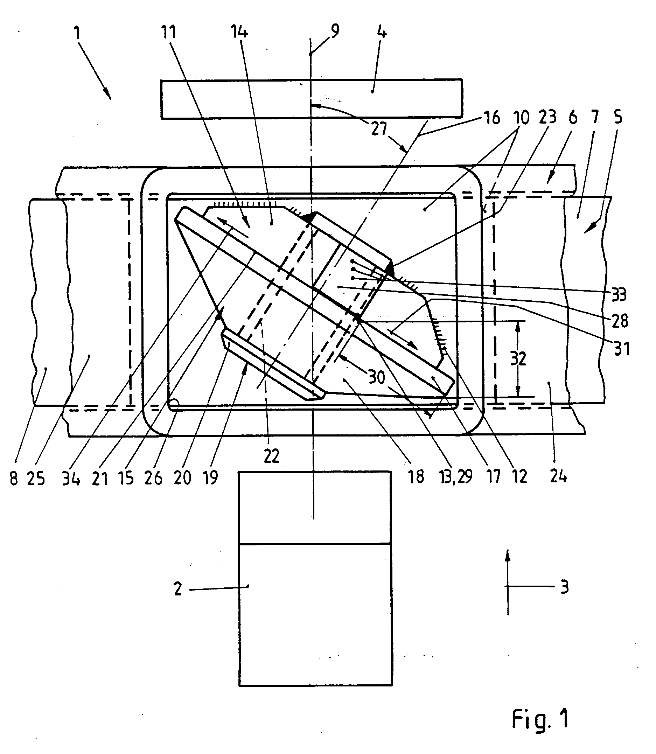

In Figur 1 sind die für die Erfindung wesentlichen Teile des Kuppeldreiecks 1 relativ zu einem schematisch angedeuteten Schlepper 2 dargestellt. Bei frontseitigem Einsatz des Kuppeldreiecks 1 gibt ein Pfeil 3 die Fahrtrichtung wieder, d. h. das Kuppeldreieck 1 befindet sich vor dem Schlepper 2 und dient zur Verbindung eines schematisch angedeuteten Anbaugerätes 4, welches sich noch vor dem Kuppeldreieck 1 befindet. Die Verbindung zwischen Kuppeldreieck 1 und Schlepper 2, die üblicherweise über eine Dreipunktaufhängung erfolgt, ist hier der Übersichtlichkeit halber nicht dargestellt. Ebenso ist die Verbindung zwischen dem Anbaugerät 4 und dem betreffenden Teil des Kuppeldreiecks 1 aus Übersichtlichkeitsgründen weggelassen. Bei heckseitiger Anordnung des Kuppeldreiecks 1 und des Anbaugerätes 4 ergibt sich die gleiche Relativlage der Teile zueinander. Die Fahrtrichtung des Schleppers 2 ist lediglich dem Pfeil 3 entgegengerichtet.

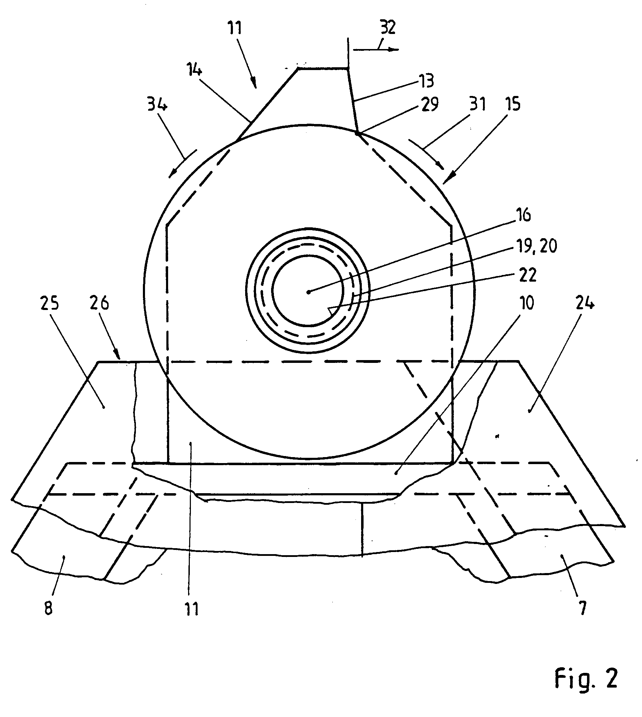

Das Kuppeldreieck 1 weist ein schlepperseitiges Rahmenteil 5 und ein geräteseitiges Rahmenteil 6 auf. Das schlepperseitige Rahmenteil 5 ist mit dem Schlepper verbunden. Das geräteseitige Rahmenteil 6 ist mit dem Anbaugerät 4 verbunden. Beide Rahmenteile 5 und 6 besitzen etwa die Form je eines Dreiecks, welches mit der Spitze nach oben gerichtet ist. Der schlepperseitige Rahmenteil 5 besteht im wesentlichen aus 2 Schenkein 7 und 8, die symmetrisch zu einer vertikalen Längsmittelebene 9 angeordnet sind und aus Abschnitten eines Rechteckrohres bestehen können. Die beiden Schenkel 7 und 8 sind oben, also im Scheitelbereich durch eine etwa horizontal sich erstreckende Platte 10 miteinander verbunden. Auf der Platte 10 ist ortsfest ein Führungsanschlag 11 vorgesehen, der klotzförmig ausgebildet ist und beispielsweise über eine Verschweißung 12 fest mit der Platte 10 verbunden ist. Bei Ausbildung als Schmiedeteil kann der Führungsanschlag 11 und die Platte 10 einstückig ausgebildet sein. Der Führungsanschlag 11 besitzt eine vergleichsweise komplizierte Formgebung, wie sie aus der Zusammenschau der Figuren 1 und 2 hervorgeht. Er weist als ein wesentliches Element eine Führungskante 13 auf, die sich in vertikaler Richtung (Figur 1) oder geringfügig gegenüber der Vertikalen geneigt (Figur 2) erstreckt. Der Führungsanschlag 11 besitzt weiterhin eine dachförmige Abschrägung 14 sowie weitere abgeschrägte Flächen, die alle im Hinblick auf die zu erreichende Führungsfunktion ausgebildet und angeordnet sind. Auch der Umriß (Figur 1) ist im Hinblick auf die Führungsfunktion gewählt.

Es ist eine Führungsrolle 15 vorgesehen, deren Achse 16 schräg zur Fahrtrichtung gemäß Pfeil 3 oder entgegen dem Pfeil 3 angeordnet ist. Die Achse 16 erstreckt sich weder parallel zur Fahrtrichtung noch senkrecht zur Fahrtrichtung, sondern schräg zur Fahrtrichtung. Die Führungsrolle 15 besitzt einen scheibenförmigen Teil 17, der den maximalen Durchmesser der Führungsrolle 15 bildet. Der scheibenförmige Teil 17 kann von einem kegelförmigen Teil 18 ergänzt sein, so daß eine breite und stabile Lagerung der Führungsrolle 15 erzielt wird. Die Führungsrolle 15 ist auf einem Lagerbolzen 19 frei drehbar gelagert, wobei sie die Drehbewegung um die Achse 16 ausführt. Der Lagerbolzen 19 kann einen Bund 20 aufweisen, an dem die Führungsrolle 15 in achsialer Richtung gehalten ist. Die andere Stirnfläche der Führungsrolle 15 im Bereich des scheibenförmigen Teils 17 liegt an einer Fläche 21 des Führungsanschlages 11 an, jedenfalls über weite Bereiche. Der Lagerbolzen 19 ist hohl ausgebildet und besitzt somit eine Bohrung 22, die sich über seine gesamte Länge erstreckt. Der Lagerbolzen 19 ist durch eine fluchtende Bohrung in der Führungsrolle 15 und in dem Führungsanschlag 11 hindurchgesteckt und am Führungsanschlag 11 beispielsweise durch eine Schweißung 23 gehalten. Die Sicherung könnte auch durch eine Verschraubung oder dergleichen bewirkt sein. Die Anordnung ist jedenfalls so getroffen, daß sich die Führungsrolle 15 auf dem Lagerbolzen 19 frei drehen kann.

Der geräteseitige Rahmenteil 6 besitzt ebenfalls 2 Schenkel 24 und 25, die aus im Querschnitt U-förmigen Profilabschnitten bestehen. Die Schenkel 24 und 25 sind ebenfalls symmetrisch zur vertikalen Längsmittelebene 9 und entsprechend den Schenkeln 7 und 8 des schlepperseitigen Rahmenteils 5 angeordnet. Oben, d. h. im Scheitelbereich der beiden Schenkel 24 und 25 ergibt sich eine rechteckförmige Durchbrechung 26, die etwa horizontal angeordnet ist. Die Führungsrolle 15 ist nun so ausgebildet und angeordnet, daß sich ihr scheibenförmiger Teil 17 zur Erreichung eines möglichst großen Außendurchmessers etwa in Richtung der Diagonalen der rechteckförmigen Durchbrechung 26 erstreckt. Hieraus ergibt sich die Schräganordnung der Achse 16 zur vertikalen Längsmittelebene 9 in einem Winkel 27, der bei einer rechteckigen Durchbrechung 26 etwas kleiner als 45° ist. Sofern die Durchbrechung 26 quadratische Formgebung aufweist, beträgt der Winkel 27 zweckmäßig genau 45°. Es sei darauf hingewiesen, daß die Achse 16 nicht unbedingt genau horizontal verlaufen muß. Wenn sie horizontal verläuft stellt der Winkel 27 in der Draufsicht gemäß Figur 1 den wahren Winkel dar. Wenn die Achse 16 geringfügig gegenüber einer Horizontalebene geneigt angeordnet ist, weicht der Winkel 27 in der Draufsicht geringfügig von dem wahren Winkel ab.

Für die nachfolgende Beschreibung sei angenommen, daß sich die Achse 16 in einer horizontalen Ebene befindet und somit der Winkel 27 den wahren Winkel der Schräganordnung darstellt. Die Führungskante 13 möge senkrecht (Figur 1) zu dieser Horizontalebene vorgesehen sein, und zwar derart, daß der Führungsanschlag 11 mit seinem höchsten Teil 28 sich oberhalb der äußeren Umrißlinie des scheibenförmigen Teils 17 der Führungsrolle 15 befindet, so daß die Führungskante 13 die Umrißlinie der Führungsrolle 15 schneidet bzw. in einem gemeinsamen Punkt 29 endet. Durch die Zuordnung der Führungskante 13 zu dem Umfang der Führungsrolle 15 wird ein Aufsetzbereich 30 auf dem Umfang der Führungsrolle 15 begrenzt. Während der Aufnahme eines Anbaugerätes 4 kommt der geräteseitige Rahmenteil 6 beispielsweise zunächst mit der Führungskante 13 des Führungsanschlages 11 in Verbindung und rutscht an diesem relativ gesehen herab, bis er im Punkt 29 Kontakt zu der Führungsrolle 15 bekommt. Durch die Schräganordnung der Führungsrolle 15 geschieht dieser Kontakt im Punkt 29 oder im anschließenden Aufsetzbereich 30, also jedenfalls in einem Bereich, der von der Achse 16 entfernt angeordnet ist, wobei dieser Aufsetzbereich 30 so angeordnet ist, daß während des Kontaktes und des Aufrutschens des geräteseitigen Rahmenteils 6 relativ zum schlepperseitigen Rahmenteil 5 die Führungsrolle 15 eine Drehbewegung in Richtung eines Pfeiles 31 ausführt. Der geräteseitige Rahmenteil 6 wird damit relativ zum schlepperseitigen Rahmenteil 5 so geführt, daß die Rahmenteile 5 und 6 in die ordnungsgemäß gekuppelte Stellung geführt bzw. verbracht werden und nicht etwa umgekehrt. Durch die Schräganordnung der Führungsrolle 15 wird eine Führungsfunktion erreicht, die sich sowohl in Fahrtrichtung gemäß Pfeil 3 als auch quer dazu auswirkt. Diese Führungsfunktion sei einem positiven Kippwinkel zugeordnet, wobei dieser Kippwinkel sich zwischen den beiden von den Rahmenteilen 5 und 6 aufgespannten Ebenen ergibt. In der ordnungsgemäß gekuppelten Stellung beträgt dieser Kippwinkel 0°. Zu Beginn einer Aufnahmebewegung eines Anbaugerätes 4 kann dieser Kippwinkel einige Grad betragen. Mit der erfindungsgemäßen Schräganordnung der Führungsrolle 15 kann ein Bereich 32 oder eine Entfernung 32 überbrückt werden, die sich in Fahrtrichtung 3 oder entgegensetzt dazu durch die Relativanordnung der Teile ergibt. Damit beim Aufnehmen des Anbaugerätes 4 sich die Führungsrolle 15 auch tatsächlich in Richtung des Pfeiles 31 und nicht etwa entgegengesetzt dazu dreht, muß der Punkt 29 so positioniert sein, daß sich die Wirklinie des Gewichtes des Anbaugerätes 4 auf den Umfang der Führungsrolle 15 in einer solchen schrägen Lage befindet, daß ihr Durchstoßpunkt 33 in dem in Figur 1 rechts der Achse 16 befindlichen Teil der Horizontalebene durch die Achse 16 befindet. Man erkennt, daß durch die Schräganordnung der Achse 16 und durch die relative Platzierung der Führungskante 13 in diesem Bereich der Horizontalebene sich einerseits ein relativ großer Bereich 32 ergibt, der während der Aufnahme des Anbaugerätes 4 überbrückt werden kann. Der Bereich 32 ist jedenfalls erheblich größer als im Stand der Technik.

Bei einem negativen Kippwinkel der beiden durch die Rahmenteile 5 und 6 aufgespannten Ebene erfüllt die Führungsrolle 15 ihre Führungsfunktion im anderen Bereich der Horizontalebene, der in Figur 1 links von der Achse 16 angeordnet ist. Hier wird beim Aufnehmen des Anbaugerätes 4 bei Vorliegen eines negativen Kippwinkels zunächst ein gegenseitiger Kontakt der Rahmenteile 5 und 6 im Bereich der Abschrägung 14 stattfinden bis auch hier ein Kontakt an der Führungsrolle 15 erreicht wird, die nun jedoch gemäß Pfeil 34 und damit entgegengesetzt zum Pfeil 31 eine Drehbewegung ausführt und auf diese Art und Weise den geräteseitigen Rahmenteil 6 führt.

Die beschriebene Relativlage ergibt sich in gleicher Weise bei frontseitigem Einsatz wie bei heckseitigem Einsatz. In beiden Fällen ist die Führungsrolle 15 dem Schlepper 2 zugekehrt angeordnet, während der Führungsanschlag 11 vom Schlepper weg auf das Anbaugerät 4 weist.

Figur 2 zeigt eine Ansicht in Richtung der Achse 16, so daß sich der Durchmesser der Führungsrolle 15 als Kreis abbildet. Quer zur Fahrtrichtung gemäß Pfeil 3 erscheint der Umriß der Führungsrolle 15 und insbesondere der maximale Durchmesser des scheibenförmigen Teils 17 jedoch in elliptischer Form mit etwa senkrecht ausgerichteter Hauptachse. Dies bedeutet, daß die Tangente an diese Ellipse steiler verläuft als die Tangente an einen entsprechenden Kreis, woraus verständlich wird, daß durch die neue Schräganordnung die Führungsfunktion der Führungsrolle verbessert wird. Das geräteseitige Rahmenteil 6 mit dem Anbaugerät 4 rutscht oder besser gesagt rollt beim Aufnehmen am schlepperseitigen Rahmenteil 5 leichter über die Führungsrolle 15 hinweg, so daß schneller, in einem größeren Bereich 32 und verläßlicher die gekuppelte Stellung erreicht wird.

Die Achse 16 muß nicht in einer Horizontalebene angeordnet sein. Es ist auch möglich, die Achse 16 geringfügig gegenüber der Horizontalebene nach vorn (bei frontseitigem Einsatz) oder nach hinten (bei heckseitigem Einsatz) nach abwärts zu neigen. Bedingt durch diese Neigung kann die Führungskante 13 gegenüber einer Vertikalen ebenfalls geneigt sein. Eine zusätzliche Neigung in dieser Richtung ist darüber hinaus möglich. Eine solche Neigung trägt dazu bei, daß der Bereich 32 (Figur 2) vergrößert wird. Es können somit noch größere Kippwinkel zwischen den beiden Ebenen überbrückt werden.

Figur 2 läßt auch erkennen, daß die Bohrung 22 des Lagerbolzens 19 vollständig oberhalb des oberen Abschlußes des geräteseitigen Rahmenteils 6 und damit auch der dort vorgesehenen Durchbrechung 26 angeordnet ist. Die Bohrung 22 eignet sich damit in einfacher Weise, hier einen Absteckbügel (nicht dargestellt) einzufügen und diesen abzustecken, so daß auf diese Art und Weise die drehbare Lagerung der Führungsrolle 15 zusätzlich noch für die Unterbringung eines mechanischen Sicherungsmittels für die gekuppelte Stellung des Kuppeldreiecks genutzt wird.

### Bezugszeichenliste:

- 1: Kuppeldreieck
- 2: Schlepper
- 3: Pfeil
- 4: Anbaugerät
- 5: schlepperseitiger Rahmenteil
- 6: geräteseitiger Rahmenteil
- 7: Schenkel
- 8: Schenkel
- 9: Längsmittelebene
- 10: Platte
- 11: Führungsanschlag
- 12: Verschweißung
- 13: Führungskante
- 14: Abschrägung
- 15: Führungsrolle
- 16: Achse
- 17: scheibenförmiger Teil
- 18: kegelförmiger Teil
- 19: Lagerbolzen
- 20: Bund
- 21: Fläche
- 22: Bohrung
- 23: Schweißung
- 24: Schenkel
- 25: Schenkel
- 26: Durchbrechung
- 27: Winkel
- 28: höchster Teil
- 29: Punkt
- 30: Aufsetzbereich
- 31: Pfeil
- 32: Bereich
- 33: Durchstoßpunkt
- 34: Pfeil

## Patentansprüche

1. Kuppeldreieck zur front- oder heckseitigen Verbindung eines landwirtschaftlichen Anbaugerätes (4) mit einem Schlepper (2), mit einem schlepperseitig angeordneten dreieckförmigen Rahmenteil (5), an dessen im Scheitelbereich angeordneter Platte (10) in einem Lager eine Führungsrolle (15) zur Erleichterung der Aufnahme des geräteseitigen Rahmenteils (6) angeordnet ist, dadurch gekennzeichnet, daß die Führungsrolle (15) mit zur Fahrtrichtung (3) bei Aufsicht von oben schräger aber nicht senkrechter Achse (16) auf der Platte (10) angeordnet ist.

2. Kuppeldreieck nach Anspruch 1, dadurch gekennzeichnet, daß neben der Führungsrolle (15), auf der dem Schlepper (2) abgekehrten Seite, ein Führungsanschlag (11) vorgesehen ist, der eine Führungskante (13) aufweist.

3. Kuppeldreieck nach Anspruch 1, dadurch gekennzeichnet, daß die Führungskante (13) relativ zur Führungsrolle (15) einen Aufsetzbereich (30) des geräteseitigen Rahmenteils (6) auf der Führungsrolle (15) auf der dem Schlepper (2) zugekehrten Seite derart begrenzt, daß die Wirklinie des Gewichts des Anbaugerätes (4) auf das schlepperseitige Rahmenteil (5) die durch die Achse (16) der Führungsrolle (15) festgelegte, etwa horizontal verlaufende Ebene zwischen Achse (16) und Schlepper (2) durchdringt.

4. Kuppeldreieck nach Anspruch 2 oder 3, dadurch gekennzeichnet, daß die Führungskante (13) an dem die Führungsrolle (15) nach oben überragenden Teil (28) des Führungsansatzes (11) vorgesehen ist.

5. Kuppeldreieck nach Anspruch 4, dadurch gekennzeichnet, daß die Führungskante (13) etwa vertikal angeordnet ist.

6. Kuppeldreieck nach einem oder mehreren der Ansprüche 1 bis 5, dadurch gekennzeichnet, daß die Führungsrolle (15) mit maximalem Durchmesser entsprechend der Diagonale der Durchtrittsöffnung (26) des geräteseitigen Rahmenteils (6) auf dem schlepperseitigen Rahmenteil (5) schräg angeordnet ist.

7. Kuppeldreieck nach einem oder mehreren der Ansprüche 1 bis 6, dadurch gekennzeichnet, daß der Führungsanschlag (11) auf der dem Schlepper (2) abgekehrten Seite eine den Umfang der Führungsrolle (15) unterschreitende Abschrägung (14) zur erleichterten Verbindung des dreieckförmigen geräteseitigen Rahmenteils (6) mit dem schlepperseitigen Rahmenteil (5) aufweist.

8. Kuppeldreieck nach Anspruch 7, dadurch gekennzeichnet, daß der Führungsanschlag (11) einen der Durchbrechung (26) des geräteseitigen Rahmenteils (6) angepaßten Umriß aufweist.

9. Kuppeldreieck nach Anspruch 1, dadurch gekennzeichnet, daß die Achse (16) der Führungsrolle (15) vom Schlepper (2) nach vorn oder hinten gegenüber der Horizontalebene geringfügig abwärts geneigt angeordnet ist.

10. Kuppeldreieck nach einem oder mehreren der Ansprüche 1 bis 9, dadurch gekennzeichnet, daß die Führungsrolle (15) auf einem hohlen Lagerbolzen (19) gelagert ist, der auch den Führungsanschlag (11) durchsetzt.

## Claims

1. A coupling device for the coupling of farming equipment (4) at the front or the rear of a tractor (2), comprising a tractor support frame (5) attachted to the tractor, the tractor support frame having a plate (10) at the top of the frame supporting a guide roller (15) for the easy connection af the tractor support frame (5) to the equipment support frame (6), **characterized**, in that guide roller (15) has a generally horizontal axis (16) supported in an angled direction with respect to the direction of travel (3) when viewed from above.

2. The coupling device according to claim 1, **characterized**, in that in addition to guide roller (15), there is a guide (11) supporting a guide edge (13) and facing away from the tractor.

3. The coupling device according to claim 2, **characterized**, in that guide edge (13), with respect to guide roller (15), positions a contact section (30) on the guide roller facing toward the tractor for contact with equipment support frame (6) in that manner, so that an acting line of the weight of the farming equipment (4) with respect to tractor support frame (5) intersects that portion of a generally horizontal plane bounded by axis (16) and tractor (2) in the plane established by axis (16).

4. The coupling device according to claims 2 or 3, **characterized**, in that guide edge (13) of guide (11) is formed as a part of guide peak (28) so that guide edge (13) protrudes above guide roller (15).

5. The coupling device according to claim 4, **characterized**, in that guide edge (13) is positioned in a generally vertical manner.

6. The coupling device according to one or more of claims 1 to 5, **characterized**, in that guide roller (15) is positioned in an angeled manner on tractor support frame (5) with respect to tractor (2), and where the maximum diameter of guide roller (15) is aligned with the diagonal length of rectangular opening (26) defined within equipment support frame (6).

7. The coupling device according to one or more of claims 1 to 6, **characterized**, in that guide (11) has an inclined section (14) facing away of the tractor (2), the inclined section intersecting the circumference of guide roller (15), whereby triangularly shaped equipment support frame (6) is easily connected to tractor support frame (5).

8. The coupling device according to claim 7, **characterized**, in that guide (11) extends upwardly through opening (26) of equipment support frame (6).

9. The coupling device according to claim 1, **characterized**, in that axis (16) of guide roller (15) extends in a downward direction when viewed from tractor (2) in a forward or rearward manner.

10. The coupling device according to one or more of claims 1 to 9, **characterized**, in that guide roller (15) is supported on a pin (19) having an opening defined therein and passing therethrough along axis (16), and extending beyond guide (11).

## Revendications

1. Triangle d'attelege pour relier à l'avant ou à l'arrière d'un tracteur (2) une machine agricole de culture (4) avec une partie de châssis (5) triangulaire disposée du côté du tracteur, dans une plaque (10) de laquelle, disposée dans la région du sommet, un galet de guidage (15) est disposé dans un palier pour faciliter la réception de la partie de châssis (6) disposée du côté de la machine,
**caractérisé** en ce que le galet de guidage (15) est disposé sur la plaque (10) avec son axe (16) oblique, en étant vu de dessus, par rapport au sens de marche (3), mais non perpendiculaire à celui-ci.

2. Triangle d'attelage selon la revendication 1, caractérisé en ce qu'il est prévu à côté du galet de guidage (15), sur le côté opposé au tracteur (2), une butée de guidage (11) qui présente une arête de guidage (13).

3. Triangle d'attelage selon la revendication 1, caractérisé en ce que l'arête de guidage (13) limite, par rapport au galet de guidage (15), une zone de pose (30) de la partie de châssis (6) située du côté de la machine sur le galet de guidage (15) sur le côté dirigé vers le tracteur (2), de telle sorte que la ligne d'action du poids de la machine de culture (4) sur la partie de châssis (5) située du côté de tracteur traverse le plan sensiblement horizontal défini par l'axe (16) du galet de guidage (15) entre l'axe (16) et le tracteur (2).

4. Triangle d'attelage selon la revendication 2 ou 3, caractérisé en ce que l'arête de guidage (13) est prévue sur la partie (28) de la butée de guidage (11) dépassant vers le haut au dessus du galet de guidage (15).

5. Triangle d'attelage selon la revendication 4, caractérisé on ce que l'arête de guidage (13) est disposée sensiblement verticalement.

6. Triangle d'attelage selon une ou plusieurs des revendications 1 à 5, caractérisé en ce que le galet de guidage (15) est disposé on oblique sur la partie de châssis (5) située du côté du tracteur avec son diamètre maximal correspondant à la diagonale de l'ouverture de passage (26) de la partie de châssis (6) située du côté de la machine.

7. Triangle d'attelage selon une ou plusieurs des revendications 1 à 6, caractérisé en ce que la butée de guidage (11) présente sur son côté opposé au tracteur (2) un biseau (14) de taille inférieure à la périphérie du galet de guidage (15) pour faciliter la liaison de la partie de châssis (6) triangulaire située du côté de la machine avec la partie de châssis (5) située du côté du tracteur.

8. Triangle d'attelage selon la revendication 7, caractérisé en ce que la butée de guidage (11) présente un contour adapté à l'ouverture (26) de la partie de châssis (6) située du côté de la machine.

9. Triangle d'attelage selon la revendication 1, caractérisé en ce que l'axe (16) du galet de guidage (15) est disposé légèrement incliné vers le bas, par rapport à un plan horizontal, à partir du tracteur (2) vers l'avant ou vers l'arrière.

10. Triangle d'attelage selon une ou plusieurs des revendications 1 à 9, caractérisé on ce que le galet de guidage (15) est monté sur un pivot creux (19) qui traverse aussi la butée de guidage (11).
